# EUROPEAN PATENT SPECIFICATION

(11) **EP 3 218 309 B1**
(45) Date of publication and mention of the grant of the patent: **22.12.2021**
(21) Application number: 15790832.8
(22) Date of filing: 28.10.2015
(51) Int. Cl.: C02F 1/00, C02F 1/469, C02F 1/44, C02F 9/00, B01D 61/12

(54) **WATER PURIFICATION SYSTEM AND METHOD**
WASSERREINIGUNGSSYSTEM UND -VERFAHREN
SYSTÈME ET PROCÉDÉ DE PURIFICATION D'EAU

(30) Priority: 11.11.2014 EP 14290342
(43) Date of publication of application: 20.09.2017
(73) Proprietor: Merck Patent GmbH, 64293 Darmstadt (DE)
(72) Inventor: ROITEL, Pascal, 67000 Strasbourg (FR); PARAGOT, Christophe, 91400 Saclay (FR); FEUILLAS, Emmanuel, 28270 Brezolles (FR); DUPONT, Stephane, 78990 Elancourt (FR)
(74) Representative: Henkel & Partner mbB
(86) International application number: PCT/EP2015/002137
(87) International publication number: WO 2016/074763

(56) References cited:
- EP-A2- 1 457 460
- WO-A1-2004/054691
- WO-A1-2006/128730
- None

## Description

The present invention relates to a water purification system and to a method of purifying water, both on a laboratory scale involving production of up to 300 l/h of deionized type 2 pure water from tap water. The system and method are further particularly directed to a situation where the feed tap water is treated by a combination of a reverse-osmosis stage (RO) and an electro-deionization stage (EDI).

### Technical Background

Deionized water is also referred to as type 2 pure water. The typical physical properties of type 2 pure water are a resistivity over 5 MΩ-cm and a total organic carbon (TOC) amount (carbon bound in an organic compound) below 30 ppb. Such pure water is widely used in laboratories in the academic, research and clinical fields and typical applications for the deionized water in these fields are buffer preparation, pH solution preparation, feed to clinical analyzers or weatherometers (laboratory devices that use high-powered light sources and water to simulate long- term outside exposure) or washing machines or stainless steel autoclaves, and the preparation of reagents for chemical analysis or synthesis. The daily consumption in a laboratory of type 2 pure water is up to 3000 liters. Type 2 pure water is produced out of tap water. The most popular process to get deionized water has been to pass the water through anionic and cationic exchange resin. This process is still widely in use today. Ion exchange resin gets exhausted after some volume of water has been treated, therefore periodic chemical regeneration of the ion exchange media is required. This chemical regeneration of the media is one of the major drawbacks of this purification process.

Electro-deionization (EDI), also identified as continuous electro-deionization, relies on electric current to carry the ionic species from a dilute compartment to a concentrate compartment. It follows that two streams come out of the EDI module: the product - type 2 pure water - and the concentrate that goes to the drain. EDI technology is not appropriate to remove the bulk of contaminants contained in tap water. Therefore a first step of purification is required. Reverse Osmosis (RO) is the first step of purification that removes 97 to 99% of the ions contained in the tap water. The major benefit of the combination RO/EDI is that no periodic chemical regeneration is required over time as no media get exhausted. On the other side, both RO and EDI purification stages remove ions at the expense of a fraction of the feed water being dumped to the drain. Typically, recovery for the RO stage is between 30% and 70% and for the EDI stage 75%. It results that the recovery rate for the RO/EDI combination ranges from 25% to 50%, in other words the quantity of feed water required to produce 100 liters of type 2 pure water ranges from 177 liters to 400 liters. Considering a typical installation that is operated to produce 1000 liters of type 2 pure water daily, 300 days per year, the quantity of feed water required per year will range from 620 cubic meters to 1200 cubic meters which is a considerable and increasing cost factor.

The RO process requires water free from chlorine compounds and particulates. Assuming the operating costs for the dechlorination step being the same order of magnitude than the operating costs for the feed water, the total operating costs for the pretreated feed water will be considerable. The EDI module is an electrochemical device that requires its feed water stream characteristics to be within specific limits in order to work properly. The EDI module has to be run between two operating limits:
1) insufficient deionization current: the product water does not meet the expected quality expressed as electrical resistivity, meaning the ion concentration of the purified water is too high.
2) too much deionization current: the electrical impedance of the EDI module seen by the power supply increases too much over time, meaning the module is subject to scaling, the end result being that the lifespan of the module is drastically shortened.

The deionization current is the key parameter to be set properly to prevent any of these two failures to occur. The tendency for scaling also depends on the calcium and magnesium ion (Ca²⁺ and Mg²⁺) content of the EDI feed water: the higher the concentration of calcium, the higher the risk of scaling. At this point, the control strategy of the RO/EDI combination consists to ensure that the EDI feed water ionic load and the Ca²⁺ and Mg²⁺ concentration do not exceed specific limits. The RO stage is expected to provide the EDI feed water whose characteristics are within the EDI requirements.

Reverse Osmosis (RO) is a purification process known as a tangential purification process. The RO pump pushes the feed stream against the RO membrane where the feed stream is divided into the concentrate and the permeate stream. The efficiency of the RO process is referred to as "rejection" and a typical rejection rate is 97 to 99%, meaning that 97 to 99% of the dissolved salts are removed from RO feed water. During the purification process, contaminants are concentrated along the membrane, requiring a minimal tangential speed to prevent the contaminants from accumulating on the RO surface membrane. A typical membrane recovery which is characterized as the ratio between the feed stream and the permeate stream is 15% so that the concentrate flow effectively represents 85% of the RO feed stream. In an attempt to save water, part of the concentrate stream is recirculated, the other part is rejected to the drain. The recirculated part is mixed to the incoming tap water in a proportion calculated so as to have a RO stage recovery within 30 and 70% as mentioned before.

Several considerations should be taken into consideration to compute the optimal RO stage recovery:
1. the failure mode of the RO membrane
2. the requirements of the EDI module,
   2.1. the maximum permeate ionic load
   2.2. the maximum permeate Ca concentration.

### 1. Failure mode of the RO membrane:

SDI (Silt Density Index), TDS (Total Dissolved Solids), LSI (Langelier Saturation Index) and chlorine concentration are the key parameters to be considered to protect the RO membrane. Of these parameters only the LSI is discussed in more detail. Increasing the RO stage recovery will concentrate all minerals content in the RO feed water. At some point, calcium will precipitate in the concentrate stream of the RO process. This is to be avoided as it causes the RO membrane to clog. The Langelier model quantifies the risk of scaling. Some properties of the feed water have to be known to compute the LSI: alkalinity, pH, CO₂ concentration and temperature. Using that model will allow to compute the maximum allowable recovery of the RO stage to prevent scaling.

### 2. Requirements of the EDI module

### 2.1. Maximum RO permeate ionic load:

The ionic load is best represented by permeate conductivity. The permeate conductivity can be monitored using a conductivity cell and the appropriate electronic circuitry. Permeate conductivity depends on the RO membrane rejection and RO feed water conductivity. The higher the RO membrane rejection, the lower the salt passage and the lower the permeate conductivity. Maximum RO stage recovery can therefore be computed so as to never exceed the maximum permeate ionic load.

### 2.2. Maximum permeate Ca²⁺/Mg²⁺ion concentration:

Ca/Mg is well rejected by the RO membrane, usually at around 99,5%. MerckMillipore^{®} EDI modules went through numerous improvements over the years to improve scaling resistance. The typical resistance for a MerckMillipore^{®} EDI module is 3ppm as CaCO3. With a 99,5% rejection, this makes the maximal Ca concentration of the RO feed at 600 ppm. The maximum RO recovery shall take this third constraint also into consideration.

A second requirement of the EDI module is the feed flow rate. An EDI module is an electrochemistry device that depends entirely on the RO stage to be provided with a constant flow rate. Electro-deionization is a process that requires time to reach steady state which is a desirable condition to perform properly. Increasing the flow rate would increase the ionic load, decreasing the flow rate would decrease the ionic load. Therefore the EDI module would show the failure associated with too high ionic load or with too low ionic load (poor water quality and risk of scaling). RO pressure, RO membrane permeability, water temperature and osmotic pressure are the four key parameters to control the RO flow rate.

Thus, the key parameters to be controlled in a RO/EDI combination depending on the tap water characteristics are permeate flow rate, RO recovery and electro-deionization current. Considering further that the daily needs of type 2 purified water in laboratory scale applications to which the present invention pertains are 300 to 3000 liters, the RO/EDI combination requires a pump that can provide a capacity of 700 liters per hour (l/h) at an operating pressure of up to 15 bar (because, depending of the tap water characteristics - mainly temperature and conductivity - the RO pressure may vary from 3.5 bars up to 15 bar). A suitable pump technology for 700 l/h and a pressure of 15 bar (15 kPa) is a rotary vane pump as an example of a positive displacement pump.

The tap water analysis is performed upon system installation and an optimum RO stage recovery is normally computed to prevent scaling while minimizing the amount of water sent to the drain. Then, the RO pressure and RO recovery are set on an installation site according to the above mentioned philosophy. The major drawback of this process is that it requires frequent manual adjustments. Since the RO flow rate is very dependent on feed water temperature, the feed water temperature changes over the seasons of the year will cause variations of the permeate flow rate will reduce the water quality and the life time of the purification chain. To avoid frequent adjustments the RO stage recovery was normally set and maintained at the low value of 33% to accommodate the changes of tap water quality without compromising the pure water quality.

EP 1457460 A2 describes a water purification system and method that allows controlling the RO flow rate whatever the feed water temperature. The system has a reverse-osmosis device for producing a permeate flow and a concentrate flow from a feed water flow, an electro-deionization means having its inlet in fluid communication with the permeate outlet of the reverse-osmosis device, and a purified water outlet. A pump is connected to the feed water flow path for elevating the pressure of the feed medium and supplying the feed water under pressure to the feed inlet of the reverse-osmosis device. A retentate flow path in fluid communication with the retentate outlet of the reverse-osmosis device is provided for removing retentate from the system. The flow rate can be controlled by a flow rate regulator with a variable restriction. A further retentate flow path in fluid communication with the retentate outlet of the reverse-osmosis device is provided for recirculating retentate to the feed flow path at an upstream position of the pump and the recirculation flow path includes an adjustable pressure regulator. The technology includes supplying an EDI module with a constant flow rate by placing a flow rate regulator on the permeate flow downstream of the RO stage. The flow regulator is an elastic eyelet forming a variable orifice - the higher the upward pressure, the smaller the orifice and the higher the pressure drop across the eyelet. The elastic eyelet solution has some limitations because it works only in the range of 1 to 10 bar. The pump runs at its maximum load (15 bar) which corresponds to an assumed worst case of low temperature feed water, e.g. the RO permeability. Further, as some of the maximal hydraulic power of the pump is lost in the flow rate control mechanism (about 7%), this known system has a relative high power consumption and could cause premature wear of the pump. Further, the accuracy is limited (+/-15%). Therefore, an average RO stage recovery of the system in operation is close to 50%.

EP 1466656 A2 discloses a water purification system in which the electro-deionization module comprises three stages in series wherein the deionization current can be controlled independently in each stage. It is known that the ionized species can be differentiated into three categories: high dissociated species, carbon dioxide (CO2) and low ionized species such as silica and boron. It is desirable to prevent scaling to remove in a sequential manner first the high dissociated species, secondly the carbon dioxide and thirdly the low ionized species. Three different deionization currents are computed and applied to each deionization stage. This system depends on a specific technical solution to regulate the operating parameters: an eyelet forming a variable orifice to provide a constant flow rate, a combination of backpressure and needle valve to provide a constant RO recovery, and a three-ways regulated direct current to provide constant current. The control philosophy of the system of EP 1466656 A2 is as follows: upon installation on a specific geographic location, a tap water analysis is performed (feed conductivity, hardness, carbon dioxide concentration, temperature), RO recovery and the DC deionization currents are computed so as to minimize the water to the drain, and the RO recovery and deionization currents are manually set on the system.

As the properties of the feed water (contaminants concentration, temperature) as well as the salt rejection of the RO membrane change over time, periodic feed water analysis and manual operating parameter adjustments have to be done. In the real world, to prevent periodic intervention on the installation site, a service engineer will apply in advance some safety factors with the settings of the expected operating parameters. This approach is detrimental to the water consumption and the long term integrity of the EDI module.

WO 2004/054691 A1 discloses a RO system for the desalination of seawater in order to produce water that is fit for use in industry, as water for humidification or as drinking water.

WO 2006/128730 A1 discloses a process for treating an aqueous medium using reverse osmosis for the desalination of seawater in order to produce drinking water. This process is based on the use of a calcium sequestering agent to increase the concentration of the recirculating loop and therefore increase the recovery of the RO stage.

It is therefore an object of the present invention to provide a water purification system and a method of purifying water that are based on a combination of a reverse-osmosis stage (RO) and an electro-deionization stage (EDI), that are both designed for laboratory scale involving production of up to 300 l/h of deionized type 2 pure water from tap water, and that are improved with respect to the water consumption in that the amount of water discharged to the drain is reduced, that can maintain the integrity of the membrane of the RO device and the integrity of the EDI device over a long time, and that require less manual service intervention.

Another aspect of the present invention is to provide a system and method of the above mentioned type which can monitor, preferably in real time, too, the key feed (tap) water contaminants without resorting to expensive tools and dedicated sensors.

To solve the problem the invention provides a laboratory scale water purification system for producing up to 300 l/h deionized type 2 pure water from tap water as defined by claim 1 and a method according to claim 13 of purifying tap water to produce deionized type 2 pure water on a laboratory scale with a volume of up to 300 l/h using a water purification system.

Preferred embodiments of the system and method are defined in the dependent claims and will become apparent from the following description.

According to a first aspect the invention provides a laboratory scale water purification system for producing up to 300 l/h deionized type 2 pure water from tap water, said system comprising:
a feed medium flow path (C,E) including a pump for elevating the pressure of the feed medium and supplying the feed medium under pressure to a feed inlet of a reverse-osmosis device, wherein the reverse- osmosis device is adapted to produce a permeate flow and a concentrate flow from the feed medium and has a permeate outlet and a retentate outlet;
an electro-deionization device having an inlet in fluid communication with the permeate outlet of the reverse-osmosis device (2), and a purified water outlet;
a first retentate flow path (A) in fluid communication with the retentate outlet of the reverse-osmosis device, for removing retentate from the system, said first retentate flow path (A) including a first flow rate regulator adapted to be remote controlled;
a second retentate flow path (B) in fluid communication with the retentate outlet of the reverse-osmosis device for recirculating retentate to the feed medium flow path at an upstream position of the pump, said second retentate flow path (B) including a second flow rate regulator adapted to be remote controlled;
a first flow meter downstream of the permeate outlet of the reverse-osmosis device for detecting the permeate flow rate produced by the reverse-osmosis device;
a first conductivity cell provided in the first retentate flow path (A) for detecting the conductivity (ion concentration) of the retentate flow;
a second conductivity cell provided in the feed medium flow path (E) for detecting the conductivity (ion concentration) of the feed medium flow; and an automatic controller for controlling the first and second flow rate regulators based on the detection results from the first flow meter and the first and second conductivity cells such that a predetermined target recovery rate and a predetermined target permeate flow rate are controlled for the reverse-osmosis device.

According to a preferred embodiment of the invention, in order to control the predetermined target permeate flow rate, the controller is adapted to simultaneously close the first and second flow rate regulators to increase the permeate flow rate and/or to simultaneously open the first and second flow rate regulators to decrease the permeate flow rate.

According to another preferred embodiment of the invention, in order to control the predetermined target recovery rate and to keep the permeate flow rate substantially constant, the controller is adapted to close the second flow rate regulator and open the first flow rate regulator to decrease the recovery rate of the reverse-osmosis device, and/or to open the second flow rate regulator and close the first flow rate regulator to increase the recovery rate for the reverse-osmosis device.

According to another preferred embodiment of the invention, in order to control a predetermined target minimum pressure, the controller is adapted to simultaneously close the first and second flow rate regulators to increase the pressure, and/or, in order to control a predetermined target maximum pressure, the controller is adapted to simultaneously open the first and second flow rate regulators to decrease the pressure, and/or, in order to control a predetermined target pressure variation, the controller is adapted to simultaneously decrease the closing or opening speeds of the first and second flow rate regulators to decrease the recovery pressure variation.

According to another preferred embodiment of the invention, the controller is adapted to control the predetermined target recovery rate in a closed loop (feedback control).

According to another preferred embodiment of the invention a pressure sensor is provided for detecting the pressure of the retentate flow in the first (A) and/or the second retentate flow path (B), and the controller is adapted to determine a difference between a predetermined retentate pressure value and the value detected by the pressure sensor and to issue an indication/alarm if the difference exceeds a threshold (meaning that the membrane in the RO device is to be cleaned/replaced).

According to another preferred embodiment of the invention a/the pressure sensor is provided for detecting the pressure of the retentate flow in the first (A) and/or the second retentate flow path (B) and the controller is adapted to perform a pump testing routine including: closing the second flow rate regulator; increasing the retentate pressure by closing the first flow rate regulator; monitoring the detected retentate pressure from the pressure sensor; and comparing the flow rate of the retentate flow detected by the second flow meter with a flow rate threshold value predetermined for a specific retentate pressure value corresponding to that detected by the pressure sensor, and issueing an indication/warning if the flow rate detected by the second flow meter is lower than said threshold value.

According to another preferred embodiment of the invention the controller is arranged to allow (a preferably manual) setting of a predetermined initial target recovery rate of the reverse-osmosis device, and optionally of an initial deionization current of the electro-deionization device, which are respectively predetermined based on a feed medium analysis of one or more of the parameters feed conductivity, hardness, carbon dioxide concentration, and temperature, and so as to minimize the amount of the feed medium removed from the system through the first retentate flow path (A), and wherein the electro-deionization device preferably comprises at least three stages in series for which the deionization current can be independently controlled by the controller.

According to another preferred embodiment of the invention, the laboratory scale water purification system further comprises a third conductivity cell provided in the feed medium flow path (C) for detecting the conductivity (ion concentration) of the feed medium flow; a fourth conductivity cell provided in a permeate flow path (D) downstream of the reverse-osmosis device for detecting the conductivity (ion concentration) of the permeate flow; and wherein the controller is adapted to determine the actual rejection of the reverse-osmosis device based on the ratio of the detection results from the third and fourth conductivity cells, to adjust the target recovery rate of the reverse-osmosis device depending on the determined actual rejection of the reverse-osmosis device to a value at which the ionic load (Ca²⁺ and Mg²⁺ load) of the permeate flow is at or below a predetermined admissible value for the electro-deionization device, preferably of the first stage thereof, and, if necessary, to adjust the deionization current of the electro-deionization device, preferably of the first stage thereof, accordingly.

According to another preferred embodiment of the invention, the laboratory scale water purification system further comprises a fifth conductivity cell provided downstream of the purified water outlet of the electro-deionization device for detecting the conductivity (ion concentration) of the purified water; and wherein the controller is adapted to determine the CO₂ content of the purified water based on the detection results from the fifth conductivity cell, and to adjust the deionization current of the electro- deionization device, preferably of the second and, if provided, of the third stage thereof accordingly.

According to another preferred embodiment of the invention the controller is adapted to perform the control of the target permeate flow rate and/or of the target recovery rate and/or of the target concentration factor and/or of the deionization current of the electro-deionization device, preferably of individual stages thereof if provided, in a closed loop (by feedback control), preferably in real time.

According to another preferred embodiment of the invention the first and/or second flow rate regulator is/are a remote controllable motorized needle valve.

According to a second aspect the invention provides a method of purifying tap water to produce deionized type 2 pure water on a laboratory scale with a volume of up to 300 l/h using a water purification system which comprises:
a feed medium flow path including a pump for elevating the pressure of the feed medium and supplying the feed medium under pressure to a feed inlet of a reverse-osmosis device, wherein the reverse-osmosis device is adapted to produce a permeate flow and a concentrate flow from the feed medium and has a permeate outlet and a retentate outlet;
an electro-deionization device having an inlet in fluid communication with the permeate outlet of the reverse-osmosis device, and a purified water outlet;
a first retentate flow path (A) in fluid communication with the retentate outlet of the reverse-osmosis device, for removing retentate from the system, said first retentate flow path (A) including a first flow rate regulator adapted to be remote controlled; and
a second retentate flow path (B) in fluid communication with the retentate outlet of the reverse-osmosis device for recirculating retentate to the feed medium flow path at an upstream position of the pump, said second retentate flow path (B) including a second flow rate regulator adapted to be remote controlled;
wherein the method comprises:
   detecting the permeate flow rate produced by the reverse-osmosis device downstream of the permeate outlet;
   detecting the conductivity (ion concentration) of the retentate flow;
   detecting the conductivity (ion concentration) of the feed medium flow; and
   controlling the first and second flow rate regulators based on the permeate flow rate produced by the reverse-osmosis device and the conductivity (ion concentration) of the retentate flow and the conductivity (ion concentration) of the feed medium flow such that a predetermined target recovery rate and a predetermined target permeate flow rate are controlled for the reverse-osmosis device.

According to a preferred embodiment of the method according to the second aspect of the invention, in order to control the predetermined target permeate flow rate, the first and second flow rate regulators are simultaneously closed to increase the permeate flow rate and/or the first and second flow rate regulators are simultaneously opened to decrease the permeate flow rate.

According to a further preferred embodiment of the method according to the second aspect of the invention, in order to control the predetermined target recovery rate and to keep the permeate flow rate substantially constant, the second flow rate regulator is closed and the first flow rate regulator is opened to decrease the recovery rate of the reverse- osmosis device, and/or to the second flow rate regulator is opened and the first flow rate regulator is closed to increase the recovery rate for the reverse-osmosis device.

According to a still further preferred embodiment of the method according to the second aspect of the invention, in order to control a predetermined target minimum recovery pressure, the first and second flow rate regulators are simultaneously closed to increase the recovery pressure, and/or, in order to control a predetermined target maximum recovery pressure, the first and second flow rate regulators are simultaneously opened to decrease the recovery pressure, and/or, in order to control a predetermined target recovery pressure variation, the closing or opening speeds of the first and second flow rate regulators are simultaneously decreased to decrease the recovery pressure variation.

According to a further preferred embodiment of the method according to the second aspect of the invention the predetermined target recovery rate is controlled in a closed loop (by feedback control).

According to a further preferred embodiment of the method according to the second aspect of the invention the method comprises detecting the pressure of the retentate flow in the first (A) and/or the second retentate flow path (B), and determining a difference between a predetermined retentate pressure value and the pressure of the retentate flow and issueing an indication/alarm if the difference exceeds a threshold (meaning that the membrane in the RO device is to be cleaned/replaced).

According to a further preferred embodiment of the method according to the second aspect of the invention the method comprises detecting the pressure of the retentate flow in the first (A) and/or the second retentate flow path (B) and performing a pump testing routine including: closing the second flow rate regulator; increasing the retentate pressure by closing the first flow rate regulator; monitoring the detected retentate pressure; and comparing the flow rate of the retentate flow with a flow rate threshold value predetermined for a specific retentate pressure value corresponding to the detected retentate pressure value, and issueing an indication/warning if the detected flow rate is lower than said threshold value.

According to a further preferred embodiment of the method according to the second aspect of the invention the method comprises, preferably manually, setting of a predetermined initial target recovery rate of the reverse-osmosis device, and optionally of an initial deionization current of the electro-deionization device, which are respectively predetermined based on a feed medium analysis of one or more of the parameters feed conductivity, hardness, dissolved carbon dioxide concentration, and temperature, and so as to minimize the amount of the feed medium removed from the system through the first retentate flow path (A), and wherein the electro-deionization device preferably comprises at least three stages in series for which the deionization current can be independently controlled.

According to a further preferred embodiment of the method mentioned before, the method comprises detecting the conductivity (ion concentration) of the feed medium flow; detecting the conductivity (ion concentration) of the permeate flow; and determining the actual rejection of the reverse- osmosis device based on the ratio of the detected conductivity (ion concentration) of the feed medium flow and permeate flow, adjusting the target recovery rate of the reverse-osmosis device depending on the determined actual rejection of the reverse-osmosis device to a value at which the ionic load (Ca²⁺ and Mg²⁺ load) of the permeate flow is at or below a predetermined admissible value for the electro-deionization device, preferably of the first stage thereof, and, if necessary, adjusting the deionization current of the electro-deionization device, preferably of the first stage thereof, accordingly.

According to a further preferred embodiment of the method mentioned before, the method comprises detecting the conductivity (ion concentration) of the purified water; and determining the CO₂ content of the purified water based on the detection result, and adjusting the deionization current of the electro-deionization device, preferably of the second and, if provided, of the third stage thereof accordingly.

According to a further preferred embodiment of the method according to the second aspect of the invention the control of the target permeate flow rate and/or of the target recovery rate and/or of the target concentration factor and/or of the deionization current of the electro- deionization device, preferably of individual stages thereof if provided, is carried out in a closed loop (by feedback control), preferably in real time.

The system and method of the present invention provide an opportunity to reduce the water consumption in the process of producing the deionized type 2 pure water from tap water while keeping the integrity of the RO device and EDI device in that the feed water quality and preferably the salt rejection of the RO stage are monitored and the critical operating parameters including RO recovery and preferably electro-deionization current of the system/method are automatically controlled and adjusted, preferably in real time. Thus, a change of the feed water conditions has no negative influence on the water consumption and the lifetime of the RO and EDI device and costly service interventions are less frequently required.

In a preferred embodiment the key feed water contaminants (dissolved CO₂, Ca²⁺ and Mg²⁺) can be detected and monitored without resorting to expensive tools and dedicated specialized sensors in that existing or relatively less costly resources (flow rate sensors, conductivity cells) of the water purification system are used.

The following is a non-limiting and exemplary description of preferred embodiments of the flow schematics of the invention explained by reference to the drawing, in which:
Fig. 1 is a system diagram of an example of a laboratory scale water purification system serving to explain features of the invention,
Fig. 2 is a system diagram of a preferred embodiment of a laboratory scale water purification system, and
Fig. 3 is a diagram showing the control input and output of the controller of the example.

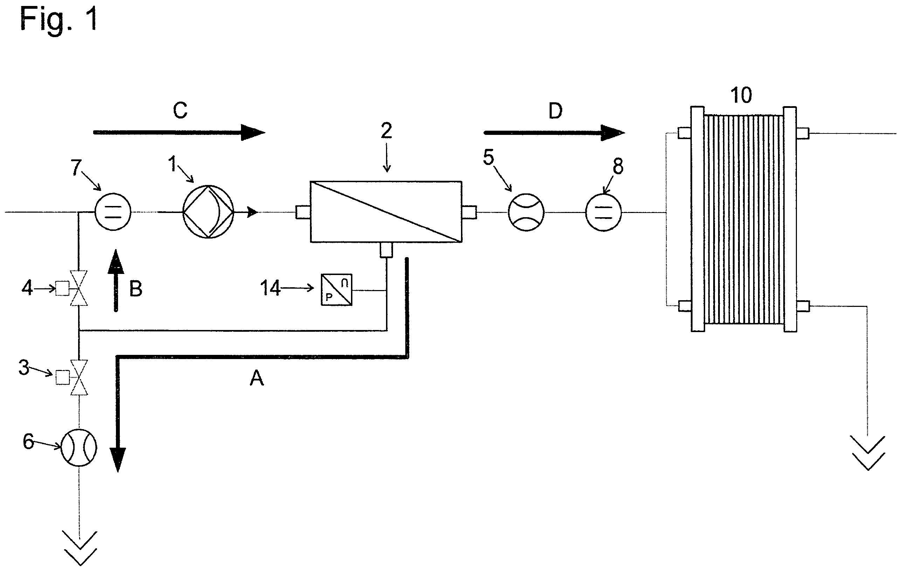

The example of the laboratory scale water purification system for producing up to 300 l/h deionized type 2 pure water from tap water of the invention shown in Fig. 1 uses at least two flow meters for controlling the recovery rate and/or permeate flow rate of the reverse- osmosis (in the following "RO") device in the system. The system has a feed medium flow path C including a positive displacement pump 1 for elevating the pressure of the feed medium (tap water) and supplying the feed medium under pressure to a feed inlet of a RO device 2 which is adapted to produce a permeate flow and a concentrate flow from the feed medium and which has a permeate outlet and a retentate outlet. An electro-deionization (in the following "EDI") device 10 is provided and has an inlet in fluid communication with the permeate outlet of the reverse- osmosis device 2 and a purified water outlet. The positive displacement pump 1 is arranged to generate a pressurized feed RO stream sized so as to provide the expected RO permeate flow rate as well as the expected concentrate flow rate (the concentrate flow rate is sized so as to tangentially remove the contaminants from the RO membrane using a sweeping effect). The membrane of the RO device 2 is sized so as to generate a specific permeate flow for a specific feed water temperature at a given RO pressure.

A first retentate flow path A is in fluid communication with the retentate outlet of the RO device 2 and serves to remove retentate from the system to a drain. The first retentate flow path A includes a first flow rate regulator 3 adapted to be remote controlled and a second retentate flow path B in fluid communication with the retentate outlet of the RO device 2 for recirculating retentate to the feed medium flow path at an upstream position of the pump 1. The second retentate flow path B includes a second flow rate regulator 4 adapted to be remote controlled. The first flow rate regulator 3 thus has the function of a drain valve 3 which is preferably a motorized needle valve that controls the size of an orifice in order to control the concentrate stream that goes to the drain, and the second flow rate regulator 4 thus has the function of a recirculation valve 4 which is preferably a motorized needle valve that controls the size of an orifice in order the control the recirculated stream.

A first flow meter 5 is provided downstream of the permeate outlet for detecting the permeate flow rate produced by the RO device 2 and a second flow meter 6 is provided in the first retentate flow path A downstream of the first flow rate regulator 3 for detecting the flow rate of the retentate flow that goes to the drain to be removed from the system.

Remote real time control of the RO permeate flow rate and of the RO recovery

In the example an automatic controller 13 is provided for remote controlling the first and second flow rate regulators 3,4 based on the detection results from the first and second flow meters 5,6 such that a predetermined target recovery rate and a predetermined target permeate flow rate are controlled for the reverse-osmosis device 2.

The regulation of the permeate flow rate, the RO recovery, a minimal RO pressure, a maximal RO pressure and a RO pressure variation is thus effected in that the pump 1 generates a constant flow upon start up and during running. During system start up the drain valve 3 and the recirculation valve 4 are moved simultaneously with different variable speeds computed by a MIMO (Multiple Inputs Multiple Outputs) control function 13 from an open position to adjust simultaneously the RO pressure and the drain flow rate with a pressure drop variation controlled and the minimal and maximal RO pressures controlled until the flow meter 5 will see the expected permeate flow rate and until the flow meter 6 will see the expected drain flow rate to reach the expected RO recovery. (RO recovery) = (RO permeate flow rate) / (RO permeate flow rate + flow rate to the drain).

During the system running, if perturbations like, for example, water temperature changes, tap feed pressure variations, feed conductivity drops, occur and change the nominal working points, the drain valve 3 and the recirculation valve 4 are moved simultaneously with different variable speed, computed by the MIMO (Multiple Inputs Multiple Outputs) control function 13, to adjust simultaneously the RO pressure and the drain flow rate with a pressure drop variation controlled and the minimal and maximal RO pressure controlled until the flow meter 5 will see the expected permeate flow rate and until the flow meter 6 will see the expected drain flow rate to reach the expected RO recovery.

The MIMO (Multiple Inputs Multiple Outputs) control function 13 is designed to ensure the stability and the performance robustness of the laboratory scale water purification system.

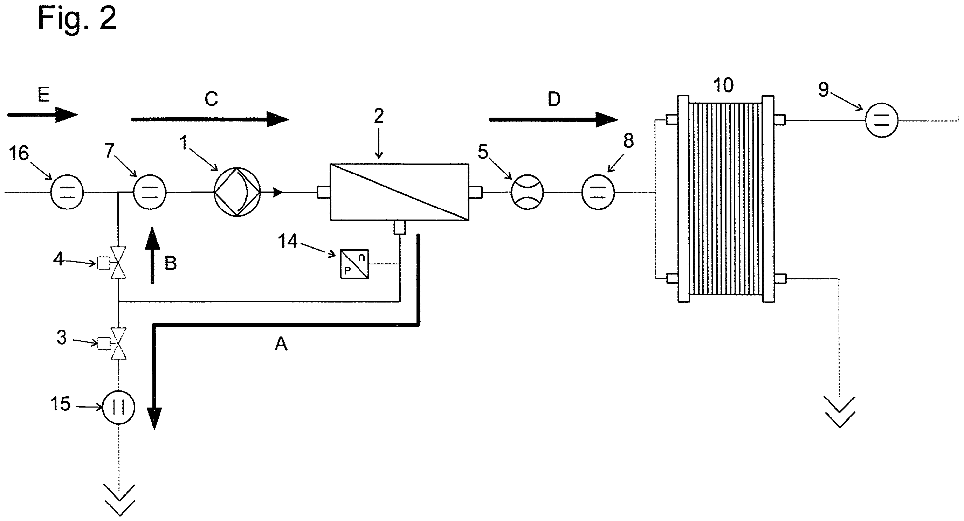

In the embodiment that is shown in Fig. 2, for controlling and regulating the permeate flow rate, a first flow meter 5 is also provided downstream of the permeate outlet for detecting the permeate flow rate produced by the reverse-osmosis device 2 and the process to control the permeate flow rate works similarly to that described above for the example.

However, the embodiment differs from the example in the manner of controlling the RO recovery. A first (drain) conductivity cell 15 is provided to detect and monitor the RO drain conductivity that reflects the ion concentration in the recirculation loop. The first conductivity cell 15 is thus provided in the retentate stream either downstream of the membrane of the RO device 2 or downstream of the second flow rate regulator or drain valve 3 as indicated on the Fig. 2. A second conductivity cell 16 is provided in a section E of the feed medium flow path for detecting the conductivity (ion concentration) of the feed medium flow, which section E is further upstream of a point where the second retentate flow path B joins a feed line and thus upstream of a conductivity sensor 7 described later for measuring the conductivity of the mix of the feed stream with the stream from the second retentate flow path B.

Once the RO permeate flow is in a steady state, the concentration factor is used as the key parameter to prevent scaling on the feed side of the membrane of the RO device 2. A contaminants analysis of the feed water will allow computing the maximum concentration factor between the feed water and drain water (using the Langelier model described above). There is a mathematical relationship between the RO recovery (Lambda) and feed flow ion concentration and drain flow ion concentration. The concentration factor set point is met by simultaneously closing the recirculation valve 4 and opening the drain valve 3 (to decrease the concentration factor) or by simultaneously opening the recirculation valve 4 and closing the drain valve 3 (to increase the concentration factor). The RO permeate flow rate as well as concentration factor are then regulated in a closed loop manner such that a predetermined target recovery rate and a predetermined target permeate flow rate are controlled for the reverse-osmosis device 2.

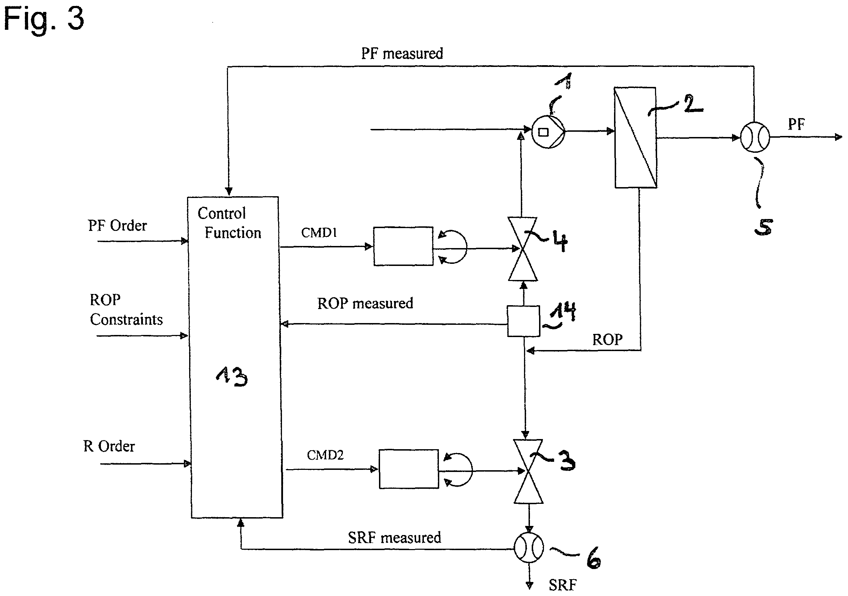

The Fig. 3 is a diagram showing the control input and output of the controller 13 of the example. In this figure the abbreviation "PF measured" refers to permeate flow rate as measured by the permeate flow rate sensor 5, "ROP" refers to RO pressure as measured by the pressure sensor 14, "SRF measured" refers to drain flow rate as measured by the drain flow sensor 6, "CMD1" refers to the control command output to the motorized needle valve 4, "CMD2" refers to the control command output to the motorized needle valve 3, "PF order" refers to the predetermined set target permeate flow rate, "R order" refers to the predetermined set target recovery rate.

The minimum control input of the controller 13 to implement the invention are thus the signal "PF measured" and the "SRF measured". Although not shown the system may include a user interface including input means and means for directly outputting information on the system like a display, and/or a data interface for exchanging the relevant information between the system and another device adapted to display this information and communicate with the system. Useful output/display information is RO permeate flow rate, RO recovery (both determined by the system), RO pressure (minimum and maximum values) and RO pressure variation. The latter information requires the provision of a pressure sensor for detecting the RO pressure as described above and a corresponding input on the side of the controller.

The system may also include a function to stop the operation of the system in a situation where values exceeding certain predefined limits or threshold values for the RO pressure, the RO permeate flow rate and/or the RO recovery are detected.

Monitoring the key feed water contaminants without resorting to expensive tools and dedicated sensors

Another aspect of the system and method of the invention in addition to reducing the water consumption by controlling the recovery rate and/or permeate flow rate as the main control targets is the capability to maintain the integrity of the membrane of the RO device and the integrity of the EDI device over a long time.

The control philosophy of the system in the context of fixed set or target points is as follows: upon installation on a specific geographic location, a tap water analysis is performed (feed conductivity, hardness, dissolved carbon dioxide concentration, temperature). Then, the RO recovery and deionization currents for the EDI device are computed so as to minimize the amount of water sent to the drain. The RO recovery and deionization currents are set on the system, i.e. are preferably input to the controller through a suitable user interface. From this point the RO recovery is automatically controlled over time to maintain the target value by controlling the preferably motorized needle valve actuators using the detection output from the flow meters 5, 6 on the permeate and drain streams.

Considering that the electro-deionization module 10 preferably comprises at least three stages in series as described in connection with the prior art, the controller 13 of the system of the invention is preferably also adapted to control the deionization current independently in each stage, the first stage being dedicated to the bulk of the ionic charge, the second stage being dedicated to the removal of carbon dioxide (CO₂) and the third stage being dedicated to low ionized species, e.g. reactive silica and boron. Thus, the control scheme of the RO/EDI combination of the system of the invention will consist in controlling the RO recovery in order to adjust the permeate ionic load to the maximal admissible load of the EDI first stage. Therefore, the deionization of the first stage will be at its maximal so as to run the RO recovery at is maximal as well. The key parameter for this previous computation is the salt passage of the membrane of the RO device or the reverse of salt passage referred to as RO membrane rejection. The RO rejection changes over time depending mainly on the age of the membrane, the RO rejection is easily monitored using two conductivity sensors 7 and 8, i.e. a conductivity cell 7 in the feed medium flow path C for detecting the conductivity (ion concentration) of the feed medium stream of the RO device 2 and a second conductivity cell 8 in the permeate flow path D downstream of the RO device 2 for detecting the conductivity (ion concentration) of the permeate stream of the RO membrane. The rejection is the ratio between the permeate conductivity and the feed medium conductivity. Therefore, the RO recovery can be adjusted in real time according to the actual rejection of the RO membrane.

Thus, the controller 13 is preferably adapted to determine the actual rejection of the RO device 2 based on the ratio of the detection results from the conductivity cells 7 and 8, to adjust the target recovery rate of the RO stage depending on the determined actual rejection of the RO device 2 to a value at which the RO permeate ionic load and total hardness level are at or below their predetermined admissible value for the EDI device 10, preferably of the first stage thereof, and, if necessary, to adjust the deionization current of the EDI device 10, preferably of the first stage thereof, accordingly.

Having determined the optimal RO recovery to minimize the water consumption of the RO device, the other requirements must still be met in order to maintain the integrity of the components: the Langelier index should be below the specified limit of calcium carbonate precipitation and the Ca²⁺ and Mg²⁺ content in the RO permeate should be below the EDI specified limit. If the Langelier index is over the maximal specified limit, then the Langelier index will become the driver for the RO recovery set point. If the Ca²⁺ and Mg²⁺ content in the RO permeate still exceeds the maximal requirement of the EDI module, then the Ca²⁺ and Mg²⁺ content in the RO permeate will become the driver for the RO recovery set point. If either the Langelier index or the maximal Ca²⁺ and Mg²⁺ becomes the driver for the RO recovery, the ionic load of the permeate will not be the maximal one for the EDI module. Therefore the EDI current for the first stage of the EDI device needs to be recomputed and applied in real time.

The last parameters that need to be applied on the EDI device are the currents on stages 2 and 3. As seen before, the current on stage 2 depends on the dissolved carbon dioxide concentration of the feed water where dissolved carbon dioxide is not removed by the membrane of the RO device. Dissolved carbon dioxide concentration is first quantified by an analytic method upon system installation. However, it is desirable to monitor the dissolved carbon dioxide concentration over time. The method in the system of the invention is as follows: assuming the ionic load is fully removed by both the RO device and the first stage of the EDI module, if there was no current applied on stages 2 and 3 of the EDI module, the water conductivity after the EDI module could be attributed only to the carbon dioxide content (according to the CO₂ concentration / water conductivity curve applicable with deionized water).

Therefore, a periodic sequence dedicated to CO₂ measurement is operated in order to update the EDI current on stage 2. The current of the last stage of the EDI module is adjusted in a closed loop manner according to the resistivity of the purified water produced by the EDI module. Thus, a fifth conductivity cell 9 is preferably provided downstream of the purified water outlet of the EDI device 10 for detecting the conductivity (ion concentration) of the purified water, and the controller 13 is adapted to determine the CO₂ content of the purified water based on the detection results from the fifth conductivity cell 9, and to adjust the deionization current of the electro- deionization device 10, preferably of the second and, if provided, of the third stage thereof accordingly.

Assuming that the EDI device in the system is properly operated according to the above mentioned control scheme, the impedance of each stage will increase slowly over time. The impedance increase rate provides an indication of the Ca²⁺ and Mg²⁺ content in the feed water over time. The controller 13 may thus include a further function to detect and monitor the impedance increase rate of the stages of the EDI device and to modify the target RO recovery in accordance with a detected or monitored change of the Ca²⁺ and Mg²⁺ content in the feed water.

The advantages of the system and method of the invention are partly described above and are partly summarized below. The system requires less components to control the RO recovery. Solenoid valves can be replaced by motorized valves. The water consumption is reduced while maintaining the quality of the purified water produced at the outlet of the EDI device. The integrity of the RO device and of the EDI device are maintained for a long period of time while an increased feed water temperature range can be accepted.

As specifically compared to the water purification system described in EP 1457460 A2 which uses an eyelet device to provide a constant flow rate by means of a deformable orifice so that the flow rate control device adds an extra pressure drop in the RO permeate stream because the eyelet device requires a minimal pressure of 1 bar to work properly (resulting in a maximal transmembrane pressure of 14 bar since the pump has a maximal bypass pressure of 15 bar), a trans-membrane pressure of 15 bars is available with the flow schematic of the present invention. The present invention thus provides a system that extends the operating temperature range by 10% while keeping a constant flow rate.

The capability of the system and method of the invention to react to a change of feed water temperature is particularly advantageous in view of the fact that the following operating conditions push the RO/EDI combination to the extreme of its operating range whereas the flow schematic of the present invention provides a solution to automatically enable the system to keep on producing pure water.

Feed water temperature is too high: this is a well-known failure mode of the RO membrane. As the water temperature increases, the RO membrane permeability increases requiring the RO pressure to decrease as well to keep the flow rate constant. As known in the art, RO rejection decreases simultaneously making the RO permeate ionic load to increase. Since the EDI module cannot cope with a higher feed water ionic load, the system is expected to decrease the RO recovery to keep the ionic load constant.

Feed water temperature is too low: in that case the permeability of the RO membrane decreases to the point where the pump can no longer accommodate the RO pressure to keep a constant RO permeate flow rate. At some point, the system will no longer provide the expected RO permeate flow rate, therefore decreasing the ionic load seen by the EDI module. The system will keep on producing water and the deionization currents of stage 1 and 2 will decrease accordingly.

In addition to the basic automatic control scheme provided by the example and the embodiment and the resulting advantages described above, the present invention provides additional functions to monitor essential purification components of the system and to use the information available in the system including the RO/EDI combination to provide information to the outside that certain maintenance work is required in order to maintain or restore the performance of the system.

A typical failure mode of the membrane of the RO device 2 is a loss of permeability and a loss of rejection. The RO membrane permeability is characterized as the RO permeate flow rate for a specific water temperature. As the RO membrane ages, some fouling may occur and the permeability of the RO membrane decreases. To compensate the decrease in permeability the system will normally automatically increase the RO pressure. In that a pressure sensor 14 is optionally provided for detecting the pressure of the retentate flow in the first retentate flow path A and/or the second retentate flow path B, the controller 13 can include a function allowing it to determine a difference between a predetermined or theorical retentate pressure value and the actual pressure value detected by the pressure sensor 14. When the detected difference exceeds a specified threshold, the controller may trigger or issue an indication/alarm meaning that the membrane in the RO device 2 is to be cleaned or replaced.

Another typical failure mode of the membrane of the RO device is the drop in rejection. The controller may include a function to memorize the loss of rejection overtime with the aging of the system components and at some time to trigger an alarm or indication.

Using the detection result of the pressure sensor 14 the system can also include a function of monitoring the wear of the pump over time. To this end a typical failure mode of the positive displacement pump 1 is the loss of flow-rate when the RO pressure increases. The controller 13 may include a function to perform a pump testing routine including the steps of closing the second flow rate regulator 4, increasing the RO retentate pressure to a specific value by closing the first flow rate regulator 3, monitoring the detected retentate pressure from the pressure sensor 14, and comparing the flow rate of the retentate flow detected by the second flow meter 6 with a predetermined set flow rate threshold value (theoretical minimal value) predetermined for a specific retentate pressure value corresponding to that detected by the pressure sensor 14, and issueing an indication/warning if the flow rate detected by the second flow meter 6 is lower than said threshold value so that a preventive maintenance of the pump.

A typical failure mode of the EDI device on the other hand is the impedance increase over time as some scaling occurs in the systems. The controller 13 may include, in the context of its capabilities to control the power supply of the stages of the EDI device, a further function of monitoring the impedance of the system over time and to trigger an alarm or indication when the impedance of the module reaches as specified set point.

Although not explicitly shown in the figures the RO device may be formed from one or a plurality of cartridges that are arranged in series or parallel. Additional sensor may be provided for detecting additional parameters of the flow at the respective positions in the system. These additional sensors may include temperature sensors, for example. The pretreatment of the tap water upstream of the pump 1 is described in the background section as being potentially required to condition the tap water suitable for treatment in the RO device. Accordingly, the system can include such a pretreatment device if desired. Although the controller 13 is shown schematic as a block, it can be implemented in a single component or in the form of a circuit or in the form of a universal computer on which a software program is loaded that renders the universal computer suitable to carry out the control processes. Further, the term "controller" should encompass any additional circuitry required to effect the control.

## Claims

1. A laboratory scale water purification system for producing up to 300 1/h deionized type 2 pure water from tap water, said system comprising:
a feed medium flow path (C,E) including a pump (1) for elevating the pressure of the feed medium and supplying the feed medium under pressure to a feed inlet of a reverse-osmosis device (2), wherein the reverse-osmosis device (2) is adapted to produce a permeate flow and a concentrate flow from the feed medium and has a permeate outlet and a retentate outlet;
an electro-deionization device (10) having an inlet in fluid communication with the permeate outlet of the reverse-osmosis device (2), and a purified water outlet;
a first retentate flow path (A) in fluid communication with the retentate outlet of the reverse-osmosis device (2), for removing retentate from the system, said first retentate flow path (A) including a first flow rate regulator (3) adapted to be remote controlled;
a second retentate flow path (B) in fluid communication with the retentate outlet of the reverse-osmosis device (2) for recirculating retentate to the feed medium flow path at an upstream position of the pump (1), said second retentate flow path (B) including a second flow rate regulator (4) adapted to be remote controlled;
a first flow meter (5) downstream of the permeate outlet for detecting the permeate flow rate produced by the reverse-osmosis device (2);
a first conductivity cell (15) provided in the first retentate flow path (A) for detecting the conductivity (ion concentration) of the retentate flow;
a second conductivity cell (16) provided in the feed medium flow path (E) for detecting the conductivity (ion concentration) of the feed medium flow; and
an automatic controller (13) for controlling the first and second flow rate regulators (3,4) based on the detection results from the first flow meter (5) and the first and second conductivity cells (15,16) such that a predetermined target recovery rate and a predetermined target permeate flow rate are controlled for the reverse-osmosis device (2).

2. The laboratory scale water purification system according to claim 1, wherein, in order to control the predetermined target permeate flow rate, said controller (13) is adapted to simultaneously close the first and second flow rate regulators (3,4) to increase the permeate flow rate and/or to simultaneously open the first and second flow rate regulators (3,4) to decrease the permeate flow rate.

3. The laboratory scale water purification system according to claim 1 or 2, wherein, in order to control the predetermined target recovery rate and to keep the permeate flow rate substantially constant, said controller ( 3) is adapted to close the second flow rate regulator (4) and open the first flow rate regulator (3) to decrease the recovery rate of the reverse-osmosis device (2), and/or to open the second flow rate regulator (4) and close the first flow rate regulator (3) to increase the recovery rate for the reverse-osmosis device (2).

4. The laboratory scale water purification system according to claim 1, 2 or 3, wherein,
in order to control a predetermined target minimum recovery pressure, said controller (13) is adapted to simultaneously close the first and second flow rate regulators (3,4) to increase the recovery pressure; and/or
in order to control a predetermined target maximum recovery pressure, said controller (13) is adapted to simultaneously open the first and second flow rate regulators (3,4) to decrease the recovery pressure; and/or
in order to control a predetermined target recovery pressure variation, said controller (13) is adapted to simultaneously decrease the closing or opening speeds of the first and second flow rate regulators (3,4) to decrease the recovery pressure variation.

5. The laboratory scale water purification system according to claim 3 or 4,
wherein said controller (13) is adapted to control the predetermined target recovery rate in a closed loop (feedback control).

6. The laboratory scale water purification system according to any one of claims 1 to 5, wherein a pressure sensor (14) is provided for detecting the pressure of the retentate flow in the first (A) and/or the second retentate flow path (B), and the controller (13) is adapted to determine a difference between a predetermined retentate pressure value and the value detected by the pressure sensor (14) and to issue an indication/alarm if the difference exceeds a threshold (meaning that the membrane in the RO device is to be cleaned/replaced).

7. The laboratory scale water purification system according to any one of claims 1 to 6, wherein a/the pressure sensor (14) is provided for detecting the pressure of the retentate flow in the first (A) and/or the second retentate flow path (B) and the controller (13) is adapted to perform a pump testing routine including:
closing the second flow rate regulator (4); increasing the retentate pressure by closing the first flow rate regulator (3);
monitoring the detected retentate pressure from the pressure sensor (14); and
comparing the flow rate of the retentate flow detected by the second flow meter (6) with a flow rate threshold value predetermined for a specific retentate pressure value corresponding to that detected by the pressure sensor (14), and issueing an indication/warning if the flow rate detected by the second flow meter (6) is lower than said threshold value.

8. The laboratory scale water purification system according to any one of claims 1 to 7, wherein the controller (13) is arranged to allow setting of a predetermined initial target recovery rate of the reverse-osmosis device (2), and optionally of an initial deionization current of the electro-deionization device (10), which are respectively predetermined based on a feed medium analysis of one or more of the parameters feed conductivity, hardness, carbon dioxide concentration, and temperature, and so as to minimize the amount of the feed medium removed from the system through the first retentate flow path (A), and wherein the electro-deionization device (10) preferably comprises at least three stages in series for which the deionization current can be independently controlled by the controller (3).

9. The laboratory scale water purification system according to claim 8, further comprising:
a third conductivity cell (7) provided in the feed medium flow path (C) for detecting the conductivity (ion concentration) of the feed medium flow;
a fourth conductivity cell (8) provided in a permeate flow path (D) downstream of the reverse-osmosis device (2) for detecting the conductivity (ion concentration) of the permeate flow; and
wherein the controller (13) is adapted to determine the actual rejection of the reverse-osmosis device (2) based on the ratio of the detection results from the third and fourth conductivity cells (7,8), to adjust the target recovery rate of the reverse-osmosis device (2) depending on the determined actual rejection of the reverse-osmosis device (2) to a value at which the ionic load (Ca²⁺ and Mg²⁺ load) of the permeate flow is at or below a predetermined admissible value for the electro-deionization device (10), preferably of the first stage thereof, and, if necessary, to adjust the deionization current of the electro-deionization device (10), preferably of the first stage thereof, accordingly.

10. The laboratory scale water purification system according to claim 9, further comprising:
a fifth conductivity cell (9) provided downstream of the purified water outlet of the electro-deionization device (10) for detecting the conductivity (ion concentration) of the purified water; and
wherein the controller (13) is adapted to determine the CO2 content of the purified water based on the detection results from the fifth conductivity cell (9), and to adjust the deionization current of the electro-deionization device (10), preferably of the second and, if provided, of the third stage thereof accordingly.

11. The laboratory scale water purification system according to any one of claims 1 to 10, wherein the controller (13) is adapted to perform the control of the target permeate flow rate and/or of the target recovery rate and/or of the target concentration factor and/or of the deionization current of the electro-deionization device (10), preferably of individual stages thereof if provided, in a closed loop (by feedback control), preferably in real time.

12. The laboratory scale water purification system according to any one of claims 1 to 11, wherein the first and/or second flow rate regulator (3,4) is/are a remote controllable motorized needle valve.

13. A method of purifying tap water to produce deionized type 2 pure water on a laboratory scale with a volume of up to 300 1/h using a water purification system which comprises:
a feed medium flow path (C,E) including a pump (1) for elevating the pressure of the feed medium and supplying the feed medium under pressure to a feed inlet of a reverse-osmosis device (2), wherein the reverse-osmosis device (2) is adapted to produce a permeate flow and a concentrate flow from the feed medium and has a permeate outlet and a retentate outlet;
an electro-deionization device (10) having an inlet in fluid communication with the permeate outlet of the reverse-osmosis device (2), and a purified water outlet;
a first retentate flow path (A) in fluid communication with the retentate outlet of the reverse-osmosis device (2), for removing retentate from the system, said first retentate flow path (A) including a first flow rate regulator (3) adapted to be remote controlled; and
a second retentate flow path (B) in fluid communication with the retentate outlet of the reverse-osmosis device (2) for recirculating retentate to the feed medium flow path at an upstream position of the pump (1), said second retentate flow path (B) including a second flow rate regulator (4) adapted to be remote controlled;
wherein said method comprises:
detecting the permeate flow rate produced by the reverse-osmosis device (2) downstream of the permeate outlet;
detecting the conductivity (ion concentration) of the retentate flow;
detecting the conductivity (ion concentration) of the feed medium flow; and
controlling the first and second flow rate regulators (3,4) based on the permeate flow rate produced by the reverse-osmosis device (2) and the conductivity (ion concentration) of the retentate flow and the conductivity (ion concentration) of the feed medium flow such that a predetermined target recovery rate and a predetermined target permeate flow rate controlled for the reverse-osmosis device (2) .

## Patentansprüche

1. Ein Wasserreinigungssystem im Labormaßstab zur Herstellung von bis zu 300 l/h deionisiertem Reinwasser des Typs 2 aus Leitungswasser, wobei das System umfasst:
einen Zufuhrmediumströmungsweg (C,E) mit einer Pumpe (1) zum Erhöhen des Drucks des Zufuhrmediums und zum Zuführen des Zufuhrmediums unter Druck zu einem Zufuhreinlass einer Umkehrosmosevorrichtung (2), wobei die Umkehrosmosevorrichtung (2) ausgelegt ist, um einen Permeatstrom und einen Konzentratstrom aus dem Zufuhrmedium zu erzeugen, und einen Permeatauslass und einen Retentatauslass aufweist,
eine Elektro-Deionisationsvorrichtung (10) mit einem Einlass, der in Fluidverbindung mit dem Permeatauslass der Umkehrosmosevorrichtung (2) steht, und einem Auslass für gereinigtes Wasser,
einen ersten Retentatströmungsweg (A), der in Fluidverbindung mit dem Retentatauslass der Umkehrosmosevorrichtung (2) steht, um Retentat aus dem System zu entfernen, wobei der erste Retentatströmungsweg (A) einen ersten Durchflussratenregler (3) enthält, der ausgelegt ist, um ferngesteuert zu werden,
einen zweiten Retentatströmungsweg (B), der in Fluidverbindung mit dem Retentatauslass der Umkehrosmosevorrichtung (2) steht, um Retentat zu dem Zufuhrmediumströmungsweg an einer stromaufwärts gelegenen Position der Pumpe (1) zurückzuführen, wobei der zweite Retentatströmungsweg (B) einen zweiten Durchflussratenregler (4) umfasst, der ausgelegt ist, um ferngesteuert zu werden,
einen ersten Durchflussmesser (5) stromabwärts des Permeatauslasses zur Erfassung der von der Umkehrosmosevorrichtung (2) erzeugten Permeatdurchflussrate,
eine erste Leitfähigkeitsmesszelle (15), die in dem ersten Retentatströmungsweg (A) zur Erfassung der Leitfähigkeit (Ionenkonzentration) des Retentatstroms vorgesehen ist,
eine zweite Leitfähigkeitszelle (16), die in dem Zufuhrmediumströmungsweg (E) vorgesehen ist, um die Leitfähigkeit (Ionenkonzentration) des Zufuhrmediumstroms zu erfassen, und
eine automatische Steuerung (13) zum Steuern des ersten und des zweiten Durchflussratenreglers (3,4) auf der Grundlage der Erfassungsergebnisse des ersten Durchflussmessers (5) und der ersten und der zweiten Leitfähigkeitszelle (15,16), so dass eine vorbestimmte Ziel-Wiedergewinnungsrate und eine vorbestimmte Ziel-Permeatdurchflussrate für die Umkehrosmosevorrichtung (2) gesteuert werden.

2. Das Wasserreinigungssystem im Labormaßstab nach Anspruch 1, wobei zur Steuerung der vorbestimmten Ziel-Permeatdurchflussrate die Steuerung (13) ausgelegt ist, um gleichzeitig den ersten und den zweiten Durchflussratenregler (3,4) zu schließen, um die Permeatdurchflussrate zu erhöhen, und/oder gleichzeitig den ersten und den zweiten Durchflussratenregler (3,4) zu öffnen, um die Permeatdurchflussrate zu verringern.

3. Das Wasserreinigungssystem im Labormaßstab nach Anspruch 1 oder 2, wobei die Steuerung (3), zur Steuerung der vorbestimmten Ziel-Wiedergewinnungsrate und zum Konstanthalten der Permeatdurchflussrate, ausgelegt ist, um den zweiten Durchflussratenregler (4) zu schließen und den ersten Durchflussratenregler (3) zu öffnen, um die Wiedergewinnungsrate der Umkehrosmosevorrichtung (2) zu verringern, und/oder den zweiten Durchflussratenregler (4) zu öffnen und den ersten Durchflussratenregler (3) zu schließen, um die Wiedergewinnungsrate für die Umkehrosmosevorrichtung (2) zu erhöhen.

4. Das Wasserreinigungssystem im Labormaßstab nach Anspruch 1, 2 oder 3, wobei,
um einen vorbestimmten minimalen Ziel-Rückgewinnungsdruck zu steuern, die Steuerung (13) ausgelegt ist, um gleichzeitig den ersten und den zweiten Durchflussratenregler (3,4) zu schließen, um den Rückgewinnungsdruck zu erhöhen, und/oder
um einen vorbestimmten Zielwert für den maximalen Rückgewinnungsdruck zu steuern, die Steuerung (13) ausgelegt, um gleichzeitig den ersten und den zweiten Durchflussratenregler (3,4) zu öffnen, um den Rückgewinnungsdruck zu verringern, und/oder
zur Steuerung einer vorbestimmten Zielschwankung des Rückgewinnungsdrucks die Steuerung (13) ausgelegt ist, um gleichzeitig die Schließ- oder Öffnungsgeschwindigkeiten des ersten und des zweiten Durchflussratenreglers (3,4) zu verringern, um die Schwankung des Rückgewinnungsdrucks zu verringern.

5. Das Wasserreinigungssystem im Labormaßstab nach Anspruch 3 oder 4,
wobei die Steuerung (13) ausgelegt ist, um die vorbestimmte Ziel-Rückgewinnungsrate in einem geschlossenen Regelkreis (Rückkopplungsregelung) zu regeln.

6. Das Wasserreinigungssystem im Labormaßstab nach einem der Ansprüche 1 bis 5, wobei ein Drucksensor (14) zum Erfassen des Drucks des Retentatstroms in dem ersten (A) und/oder dem zweiten Retentatströmungsweg (B) vorgesehen ist und die Steuerung (13) ausgelegt ist, um eine Differenz zwischen einem vorbestimmten Retentatdruckwert und dem von dem Drucksensor (14) erfassten Wert zu bestimmen und eine Anzeige/einen Alarm auszugeben, wenn die Differenz einen Schwellenwert überschreitet (was bedeutet, dass die Membran in der Umkehrosmosevorrichtung gereinigt/ausgetauscht werden muss).

7. Das Wasserreinigungssystem im Labormaßstab nach einem der Ansprüche 1 bis 6, wobei ein/der Drucksensor (14) zum Erfassen des Drucks des Retentatstroms in dem ersten (A) und/oder zweiten Retentatströmungsweg (B) vorgesehen ist und die Steuerung (13) ausgelegt ist, um eine Pump-Testroutine durchzuführen, die Folgendes umfasst:
Schließen des zweiten Durchflussratenreglers (4),
Erhöhen des Retentatdrucks durch Schließen des ersten Durchflussratenreglers (3),
Überwachen des erfassten Retentatdrucks von dem Drucksensor (14), und
Vergleichen der von dem zweiten Durchflussmesser (6) erfassten Durchflussrate des Retentatstroms mit einem Durchflussraten-Schwellenwert, der für einen spezifischen Retentatdruckwert vorgegeben ist, der dem von dem Drucksensor (14) erfassten entspricht, und Ausgeben einer Anzeige/Warnung, wenn die von dem zweiten Durchflussmesser (6) erfasste Durchflussrate unter dem Schwellenwert liegt.

8. Das Wasserreinigungssystem im Labormaßstab nach einem der Ansprüche 1 bis 7, wobei die Steuerung (13) angeordnet ist, um die Einstellung einer vorbestimmten anfänglichen Ziel-Wiedergewinnungsrate der Umkehrosmosevorrichtung (2) und optional eines anfänglichen Deionisationsstroms der Elektro-Deionisationsvorrichtung (10) ermöglicht, die jeweils auf der Grundlage einer Analyse des Zufuhrmediums von einem oder mehreren der Parameter Leitfähigkeit, Härte, Kohlendioxidkonzentration und Temperatur vorgegeben sind, und um so die Menge des aus dem System durch den ersten Retentatströmungsweg (A) entfernten Zufuhrmediums zu minimieren, und wobei die Elektro-Deionisationsvorrichtung (10) vorzugsweise mindestens drei Stufen in Reihe umfasst, für die der Deionisationsstrom unabhängig durch die Steuerung (3) gesteuert werden kann.

9. Das Wasserreinigungssystem im Labormaßstab nach Anspruch 8, ferner umfassend:
eine dritte Leitfähigkeitszelle (7), die in dem Zufuhrmediumströmungsweg (C) vorgesehen ist, um die Leitfähigkeit (Ionenkonzentration) des Zufuhrmediumstroms zu erfassen,
eine vierte Leitfähigkeitszelle (8), die in einem Permeatströmungsweg (D) stromabwärts der Umkehrosmosevorrichtung (2) vorgesehen ist, um die Leitfähigkeit (Ionenkonzentration) des Permeatstroms zu erfassen, und
wobei die Steuerung (13) ausgelegt ist, um die tatsächliche Zurückweisung der Umkehrosmosevorrichtung (2) auf der Grundlage des Verhältnisses der Erfassungsergebnisse von der dritten und vierten Leitfähigkeitszelle (7,8) zu bestimmen, die Ziel-Wiedergewinnungsrate der Umkehrosmosevorrichtung (2) in Abhängigkeit von der ermittelten tatsächlichen Zurückweisung der Umkehrosmosevorrichtung (2) auf einen Wert einzustellen, bei dem die Ionenbelastung (Ca²⁺- und Mg²⁺-Belastung) des Permeatstroms bei oder unter einem vorbestimmten zulässigen Wert für die Elektrodeionisationsvorrichtung (10), vorzugsweise der ersten Stufe davon, liegt, und, falls erforderlich, den Deionisationsstrom der Elektrodeionisationsvorrichtung (10), vorzugsweise der ersten Stufe davon, entsprechend einzustellen.

10. Das Wasserreinigungssystem im Labormaßstab nach Anspruch 9, ferner umfassend:
eine fünfte Leitfähigkeitszelle (9), die stromabwärts des Auslasses für gereinigtes Wasser der Elektrodeionisationsvorrichtung (10) vorgesehen ist, um die Leitfähigkeit (Ionenkonzentration) des gereinigten Wassers zu erfassen, und
wobei die Steuerung (13) ausgelegt ist, um den CO2-Gehalt des gereinigten Wassers auf der Grundlage der Erfassungsergebnisse von der fünften Leitfähigkeitszelle (9) zu bestimmen und den Deionisationsstrom der Elektrodeionisationsvorrichtung (10), vorzugsweise der zweiten und, falls vorgesehen, der dritten Stufe davon, entsprechend einzustellen.

11. Das Wasserreinigungssystem im Labormaßstab nach einem der Ansprüche 1 bis 10, wobei die Steuerung (13) ausgelegt ist, um die Steuerung der Ziel-Permeatdurchflussrate und/oder der Ziel-Wiedergewinnungsrate und/oder des Ziel-Konzentrationsfaktors und/oder des Deionisationsstroms der Elektrodeionisationsvorrichtung (10), vorzugsweise einzelner Stufen davon, falls vorgesehen, in einer geschlossenen Schleife (durch Rückkopplungssteuerung), vorzugsweise in Echtzeit, durchzuführen.

12. Das Wasserreinigungssystem im Labormaßstab nach einem der Ansprüche 1 bis 11, wobei der erste und/oder zweite Durchflussratenregler (3,4) ein fernsteuerbares motorisiertes Nadelventil ist/sind.

13. Ein Verfahren zum Reinigen von Leitungswasser zur Herstellung von deionisiertem Reinwasser des Typs 2 im Labormaßstab mit einem Volumen von bis zu 300 l/h unter Verwendung eines Wasserreinigungssystems, das umfasst:
einen Zufuhrmediumströmungsweg (C,E) mit einer Pumpe (1) zum Erhöhen des Drucks des Zufuhrmediums und zum Zuführen des Zufuhrmediums unter Druck zu einem Zufuhreinlass einer Umkehrosmosevorrichtung (2), wobei die Umkehrosmosevorrichtung (2) ausgelegt ist, um einen Permeatstrom und einen Konzentratstrom aus dem Zufuhrmedium zu erzeugen, und einen Permeatauslass und einen Retentatauslass aufweist,
eine Elektro-Deionisationsvorrichtung (10) mit einem Einlass, der in Fluidverbindung mit dem Permeatauslass der Umkehrosmosevorrichtung (2) steht, und einem Auslass für gereinigtes Wasser,
einen ersten Retentatströmungsweg (A), der in Fluidverbindung mit dem Retentatauslass der Umkehrosmosevorrichtung (2) steht, um Retentat aus dem System zu entfernen, wobei der erste Retentatströmungsweg (A) einen ersten Durchflussratenregler (3) enthält, der ausgelegt ist, um ferngesteuert zu werden, und
einen zweiten Retentatströmungsweg (B), der in Fluidverbindung mit dem Retentatauslass der Umkehrosmosevorrichtung (2) steht, um Retentat zu dem Zufuhrmediumströmungsweg an einer stromaufwärts gelegenen Position der Pumpe (1) zurückzuführen, wobei der zweite Retentatströmungsweg (B) einen zweiten Durchflussratenregler (4) umfasst, der ausgelegt ist, um ferngesteuert zu werden, wobei das Verfahren umfasst:
Erfassen der von der Umkehrosmosevorrichtung (2) stromabwärts des Permeatauslasses erzeugten Permeatdurchflussrate,
Erfassen der Leitfähigkeit (Ionenkonzentration) des Retentatstroms,
Erfassen der Leitfähigkeit (Ionenkonzentration) des Zufuhrmediumstroms, und
Steuern des ersten und des zweiten
Durchflussratenreglers (3,4) auf der Grundlage der von der Umkehrosmosevorrichtung (2) erzeugten Permeatdurchflussmenge und der Leitfähigkeit (Ionenkonzentration) des Retentatstroms und der Leitfähigkeit (Ionenkonzentration) des Zufuhrmediumstroms, so dass eine vorbestimmte Ziel-Wiedergewinnungsrate und eine vorbestimmte Ziel-Permeatdurchflussmenge für die Umkehrosmosevorrichtung (2) gesteuert werden.

## Revendications

1. Système de purification de l'eau à l'échelle du laboratoire pour produire jusqu'à 300 l/h d'eau pure déminéralisée de type 2 à partir de l'eau du robinet, le système comprenant :
un trajet (C, E) de courant d'un milieu d'alimentation ayant une pompe (1) pour élever la pression du milieu d'alimentation et envoyer le milieu d'alimentation sous pression à une entrée d'alimentation d'un dispositif (2) d'osmose inverse, dans lequel le dispositif (2) d'osmose inverse est conçu pour produire un courant de perméat et un courant de concentré à partir du milieu de l'alimentation et a une sortie de perméat et une sortie de rétentat ;
un dispositif (10) d'électro-déminéralisation ayant une entrée en communication fluidique avec la sortie de perméat du dispositif (2) d'osmose inverse et une sortie d'eau purifiée ;
un premier trajet (A) de courant de rétentat en communication fluidique avec la sortie de rétentat du dispositif (2) d'osmose inverse pour retirer du rétentat du système, le premier trajet (A) de courant de rétentat ayant un premier régulateur (3) de débit conçu pour être commandé à distance ;
un deuxième trajet (B) de courant de rétentat en communication fluidique avec la sortie de rétentat du dispositif (2) d'osmose inverse pour renvoyer du rétentat au trajet du courant du milieu d'alimentation en une position en amont de la pompe (1), le deuxième trajet (B) de courant de rétentat ayant un deuxième régulateur (4) de débit conçu pour être contrôlé à distance ;
un premier débitmètre (5) en aval de la sortie de perméat, pour détecter le débit de perméat produit par le dispositif (2) d'osmose inverse ;
une première cellule (15) de conductivité prévue dans le premier trajet (A) de courant de rétentat pour détecter la conductivité (concentration en ions) du courant de rétentat ;
une deuxième cellule (16) de conductivité prévue dans le trajet (E) de courant de milieu d'alimentation pour détecter la conductivité (concentration en ions) du courant du milieu d'alimentation ; et
une unité (13) automatique de commande pour commander les premier et deuxième régulateurs (3, 4) de débit sur la base des résultats de la détection par le premier débitmètre (5) et par les première et deuxième cellules (15, 16) de conductivité de manière à commander un taux de récupération cible déterminé à l'avance et un débit de perméat cible déterminé à l'avance pour le dispositif (2) d'osmose inverse.

2. Système de purification de l'eau à l'échelle du laboratoire suivant la revendication 1, dans lequel, afin de commander le débit de perméat cible déterminé à l'avance, l'unité (13) de commande est conçue pour fermer simultanément le premier et le deuxième régulateurs (3, 4) de débit afin d'augmenter le débit de perméat et/ou pour ouvrir simultanément le premier et le deuxième régulateurs (3, 4) de débit pour diminuer le débit de perméat.

3. Système de purification de l'eau à l'échelle du laboratoire suivant la revendication 1 ou 2, dans lequel, afin de commander le taux de récupération cible déterminé à l'avance et de maintenir le débit de perméat sensiblement constant, l'unité (3) de commande est conçue pour fermer le deuxième régulateur (4) de débit et pour ouvrir le premier régulateur (3) de débit afin de diminuer le taux de récupération du dispositif (2) d'osmose inverse et/ou pour ouvrir le deuxième régulateur (4) de débit et pour fermer le premier régulateur (3) de débit afin d'augmenter le taux de récupération du dispositif (2) d'osmose inverse.

4. Système de purification de l'eau à l'échelle du laboratoire suivant la revendication 1, 2 ou 3, dans lequel,
afin de commander une pression de récupération minimum cible déterminée à l'avance, l'unité (13) de commande est conçue pour fermer simultanément le premier et le deuxième régulateurs (3, 4) de débit afin d'élever la pression de récupération ; et/ou
afin de commander une pression de récupération maximum cible déterminée à l'avance, l'unité (13) de commande est conçue pour ouvrir simultanément le premier et le deuxième régulateurs (3, 4) de débit afin d'abaisser la pression de récupération ; et/ou
afin de commander une variation de pression de récupération cible déterminée à l'avance, l'unité (13) de commande est conçue pour diminuer simultanément les vitesses d'ouverture ou de fermeture des premier et deuxième régulateurs (3, 4) de débit afin de diminuer la variation de la pression de récupération.

5. Système de purification de l'eau à l'échelle du laboratoire suivant la revendication 3 ou 4, dans lequel
l'unité (13) de commande est conçue pour commander le taux de récupération cible déterminé à l'avance suivant une boucle fermée (commande asservie).

6. Système de purification de l'eau à l'échelle du laboratoire suivant l'une quelconque des revendications 1 à 5, dans lequel un capteur (14) de pression est prévu pour détecter la pression du courant de rétentat dans le premier (A) et/ou dans le deuxième trajet (B) de courant de rétentat et l'unité (13) de commande est conçue pour déterminer une différence entre une valeur de la pression du rétentat déterminée à l'avance et la valeur détectée par le capteur (14) de pression et pour émettre une indication / alerte si la différence dépasse un seuil (signifiant que la membrane du dispositif d'osmose inverse doit être nettoyée / remplacée).

7. Système de purification de l'eau à l'échelle du laboratoire suivant l'une quelconque des revendications 1 à 6, dans lequel un/le capteur (14) de pression est prévu pour détecter la pression du courant de rétentat dans le premier (A) et/ou le deuxième trajet (B) de courant de rétentat et l'unité (13) de commande est conçue pour effectuer une routine de test de la pompe comprenant :
fermer le deuxième régulateur (4) de débit ; élever la pression du rétentat en fermant le premier régulateur (3) de débit ;
contrôler la pression de rétentat détectée par le capteur (14) de pression ; et
comparer le débit du courant de rétentat détecté par le deuxième débitmètre (6) à une valeur de seuil de débit déterminée à l'avance pour une valeur de pression de rétentat précise correspondant à celle détectée par le capteur (14) de pression et émettre une indication / alerte si le débit détecté par le deuxième débitmètre (6) est plus petit que la valeur de seuil.

8. Système de purification de l'eau à l'échelle du laboratoire suivant l'une quelconque des revendications 1 à 7, dans lequel l'unité (13) de commande est agencée pour permettre de fixer un taux de récupération cible initial déterminé à l'avance du dispositif (2) d'osmose inverse et éventuellement d'un courant initial de déminéralisation du dispositif (10) d'électro-déminéralisation, qui sont déterminés à l'avance respectivement sur la base d'une analyse dans le milieu d'alimentation d'un ou de plusieurs des paramètres, conductivité de la charge, dureté, concentration en dioxyde de carbone et température, et de minimiser ainsi la quantité de milieu d'alimentation retiré du système par le premier trajet (A) de courant de rétentat, et dans lequel le dispositif (10) d'électro-déminéralisation comprend de préférence au moins trois étages en série pour lesquels le courant de déminéralisation peut être commandé indépendamment par l'unité (3) de commande.

9. Système de purification de l'eau à l'échelle du laboratoire suivant la revendication 8, comprenant en outre :
une troisième cellule (7) de conductivité prévue dans le trajet (C) du courant du milieu d'alimentation pour détecter la conductivité (concentration en ions) du courant du milieu d'alimentation ;
une quatrième cellule (8) de conductivité prévue dans le trajet (D) de courant de perméat en aval du dispositif (2) d'osmose inverse pour détecter la conductivité (concentration en ions) du courant de perméat ;
dans lequel l'unité (13) de commande est conçue pour déterminer le rejet réel du dispositif (2) d'osmose inverse sur la base du rapport des résultats de détection des troisième et quatrième cellules (7, 8) de conductivité, afin de régler le taux de récupération cible du dispositif (2) d'osmose inverse en fonction du rejet réel déterminé du dispositif (2) d'osmose inverse à une valeur à laquelle la charge ionique (charge en Ca²⁺ et Mg²⁺) du courant de perméat est à une valeur admissible déterminée à l'avance pour le dispositif (10) d'électro-déminéralisation ou en-dessous de cette valeur, de préférence à son premier étage et, si nécessaire, pour régler le courant de déminéralisation du dispositif (10) d'électro-déminéralisation de préférence à son premier étage, en conséquence.

10. Système de purification de l'eau à l'échelle du laboratoire suivant la revendication 9, comprenant en outre :
une cinquième cellule (9) de conductivité prévue en aval de la sortie de l'eau purifiée du dispositif (10) d'électro-déminéralisation pour détecter la conductivité (concentration en ions) de l'eau purifiée ; et
dans lequel l'unité (13) de commande est conçue pour déterminer la teneur en CO2 de l'eau purifiée sur la base des résultats de la détection de la cinquième cellule (9) de conductivité et pour régler le courant de déminéralisation du dispositif (10) d'électro-déminéralisation, de préférence de son deuxième et, s'il y en a un, de son troisième étage en conséquence.

11. Système de purification de l'eau à l'échelle du laboratoire suivant l'une quelconque des revendications 1 à 10, dans lequel l'unité (13) de commande est conçue pour effectuer la commande du débit de perméat cible et/ou du taux de récupération cible et/ou du facteur de concentration cible et/ou du courant de déminéralisation du dispositif (10) d'électro-déminéralisation, de préférence de ses étages individuels, s'il y en a, en boucle fermée (par commande asservie), de préférence en temps réel.

12. Système de purification de l'eau à l'échelle du laboratoire suivant l'une quelconque des revendications 1 à 11, dans lequel le premier et/ou le deuxième régulateur (3, 4) de débit est / sont une soupape à aiguille motorisée pouvant être commandée à distance.

13. Procédé de purification de l'eau du robinet pour produire de l'eau pure déminéralisée de type 2 à l'échelle du laboratoire en un volume allant jusqu'à 300 l/h en utilisant un système de purification de l'eau qui comprend :
un trajet (C, E) d'un courant d'un milieu d'alimentation ayant une pompe (1) pour élever la pression du milieu d'alimentation et envoyer le milieu d'alimentation sous pression à une entrée d'alimentation d'un dispositif (2) d'osmose inverse, dans lequel le dispositif (2) d'osmose inverse est conçu pour produire un courant de perméat et un courant de concentré à partir du milieu de l'alimentation et a une sortie de perméat et une sortie de rétentat ;
un dispositif (10) d'électro-déminéralisation ayant une entrée en communication fluidique avec la sortie de perméat du dispositif (2) d'osmose inverse et une sortie d'eau purifiée ;
un premier trajet (A) de courant de rétentat en communication fluidique avec la sortie de rétentat du dispositif (2) d'osmose inverse pour retirer du rétentat du système, le premier trajet (A) de courant de rétentat ayant un premier régulateur (3) de débit conçu pour être commandé à distance ;
un deuxième trajet (B) de courant de rétentat en communication fluidique avec la sortie de rétentat du dispositif (2) d'osmose inverse pour envoyer du rétentat au trajet du courant du milieu d'alimentation en une position en amont de la pompe (1), le deuxième trajet (B) de courant de rétentat ayant un deuxième régulateur (4) de débit conçu pour être contrôlé à distance ;
dans lequel le procédé comprend :
détecter le débit de perméat produit par le dispositif (2) d'osmose inverse en aval de la sortie de perméat ;
détecter la conductivité (concentration en ions) du courant de rétentat ;
détecter la conductivité (concentration en ions) du courant du milieu d'alimentation ; et
commander le premier et le deuxième régulateurs (3,4) de débit sur la base du débit de perméat produit par le dispositif (2) d'osmose inverse et de la conductivité (concentration en ions) du courant de rétentat et de la conductivité (concentration en ions) du courant du milieu d'alimentation, de manière à obtenir un taux de récupération cible déterminé à l'avance et un débit de perméat cible déterminé à l'avance pour le dispositif (2) d'osmose inverse.
